(19) **Europäisches Patentamt / European Patent Office / Office européen des brevets**

(11) **EP 3 202 108 B1**

(12) **FASCICULE DE BREVET EUROPEEN**

(45) Date de publication et mention
de la délivrance du brevet:
**30.10.2024 Bulletin 2024/44**

(21) Numéro de dépôt: **15781125.8**

(22) Date de dépôt: **28.09.2015**

(51) Classification Internationale des Brevets (IPC):
**H04N 21/6377** (2011.01) **H04N 21/2343** (2011.01)
**H04N 21/4402** (2011.01) **H04L 65/80** (2022.01)

(52) Classification Coopérative des Brevets (CPC):
**H04L 67/303; H04L 65/613; H04L 65/80;
H04L 67/04; H04N 21/4314; H04N 21/4355;
H04N 21/4621; H04N 21/8543**

(86) Numéro de dépôt international:
**PCT/FR2015/052574**

(87) Numéro de publication internationale:
**WO 2016/051055 (07.04.2016 Gazette 2016/14)**

(54) **PROCÉDÉ ET DISPOSITIF D'ADAPTATION D'AFFICHAGE D'UN FLUX VIDÉO PAR UN CLIENT**

VERFAHREN UND VORRICHTUNG ZUR ANPASSUNG DER ANZEIGE EINES VIDEOSTROMS
DURCH EINEN CLIENT

METHOD AND DEVICE FOR ADAPTING THE DISPLAY OF A VIDEO STREAM BY A CLIENT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.09.2014 FR 1459248**

(43) Date de publication de la demande:
**09.08.2017 Bulletin 2017/32**

(73) Titulaire: **Orange**
**92130 Issy-les-Moulineaux (FR)**

(72) Inventeurs:
• **BAUMANN, Maximilien**
**78180 Montigny Le Bretonneux (FR)**

• **LACHARME, Sandrine**
**22300 Lannion (FR)**

(56) Documents cités:
**US-A1- 2007 024 705     US-A1- 2009 259 766
US-A1- 2012 066 289     US-A1- 2012 102 184
US-A1- 2013 195 204**

• **BENJAMIN RAINER ET AL: "A seamless Web
integration of adaptive HTTP streaming", SIGNAL
PROCESSING CONFERENCE (EUSIPCO), 2012
PROCEEDINGS OF THE 20TH EUROPEAN, IEEE,
27 August 2012 (2012-08-27), pages 1519 - 1523,
XP032254392, ISBN: 978-1-4673-1068-0**

**Description**

L'invention concerne un procédé d'adaptation d'affichage d'un flux vidéo par un client, en particulier un client, tel qu'un navigateur HTML5.0 et/ou utilisant un protocole de communication WebRTC pour recevoir le flux vidéo.

L'affichage d'un flux vidéo par un client est, généralement, fixé, de manière prédéfinie, sur le client au moyen d'une balise vidéo.

La demande de brevet américaine US20120066289 enseigne l'utilisation d'un élément vidéo HTML5 dans lequell'attribut source de la balise vidéo sera modifiée pour utiliser une source d'un flux comportant le même flux vidéo avec une qualité différente.

Dans l'article "A seamless Web intégration of Adaptive HTTP Streaming", EUSIPCO, 27 août 2012, p. 15919-1523, XP032254392, B. Rainer propose d'intégrer une diffusion dynamique et adaptative du flux vidéo MPEG-DASH dans la balise vidéo soit en configurant les attributs de la balise vidéo, soit en accédant directement à la balise au moyen d'une interface API. Cette intégration permet ainsi que les segments du flux vidéo soit transmis avec une qualité et un débit variable pour améliorer la qualité de la vidéo reçue.

Suivant la résolution de l'équipement fournissant, la vidéo portée par le flux vidéo sera affichée soit de manière déformée, soit partiellement, soit de manière illisible pour l'utilisateur d'un terminal mettant en oeuvre le client, soit voire ne pourra pas être affichée y compris en utilisant l'enseignement de la demande US20120066289 et/ou de B. Rainer.

En effet, si la balise vidéo est égale à la résolution de l'équipement fournissant le flux vidéo, soit l'affichage de la vidéo occupera une toute petite partie de la fenêtre du client si la taille de l'écran du terminal est grande par rapport à cette résolution, soit l'affichage d'une partie de la vidéo sera rogné si la taille de l'écran du terminal est petite par rapport à cette résolution.

En outre, si la balise vidéo est égale à la taille de la fenêtre du client sur laquelle la vidéo est affichée, la vidéo sera éventuellement être déformée, et/ou étiré et/ou floue en raison du fort ratio entre la résolution de l'équipement fournissant le flux vidéo et la taille de la fenêtre d'affichage.

Dans le cas d'affichage de vidéo chargée préalablement à l'affichage, des logiciels de redimensionnement sont proposés qui permettent de redimensionner la vidéo à la taille de la fenêtre du client sur laquelle elle est affichée afin que la vidéo occupe totalement dans au moins une dimension la fenêtre du client sans pour autant être déformée. Ce traitement de redimensionnement demande un délai de traitement et nécessite de traiter totalement la vidéo avant de l'afficher.

Un des buts de la présente invention est de remédier à des insuffisances de l'état de la technique.

Un objet de l'invention est un procédé d'adaptation d'affichage d'un flux vidéo par un client pendant l'affichage par le client d'un flux vidéo reçu d'un équipement fournissant le flux vidéo avec une résolution fournie. Le procédé d'adaptation comporte une modification d'un format de mise en page dans une balise vidéo du client. Le format de mise en page de la balise vidéo est apte à configurer le contrôle de format d'affichage du flux vidéo par le client dans une fenêtre d'affichage du client. Le format modifié de mise en page de la balise vidéo modifiée est fonction d'une résolution de l'équipement fournissant le flux vidéo, dite résolution fournie, d'une taille de la fenêtre d'affichage du client dans laquelle le flux vidéo et d'un paramètre de précision d'affichage. Le format modifié de mise en page de la balise vidéo modifiée a une même relation que la résolution fournie à la taille de la fenêtre d'affichage dans laquelle le flux vidéo est affiché par le client.

Il est à noter que le format de mise en page de la balise vidéo comporte autant d'attributs de mise en page que de dimensions du format de mise en page. Par exemple, pour un format de mise en page à deux dimensions, le format de mise en page de la balise vidéo est composé de deux attributs de mise en page, tel que « width » pour la largeur de la vidéo affichée, et « height » pour la hauteur de la vidéo affichée.

Ainsi, l'affichage d'un flux vidéo temps réel peut être redimensionné tout en conservant le caractère temps réel, sans déformation et sans perte de qualité lors de l'affichage de la vidéo portée par le flux vidéo. Le paramètre de précision d'affichage permet notamment de conserver le radio de la vidéo d'origine 4 :3, 16 :9, etc.

Avantageusement, le procédé d'adaptation comporte, suite à une réception d'au moins la résolution fournie de l'équipement fournissant le flux vidéo, un traitement de ladite résolution fournie en fonction du paramètre de précision d'affichage, la résolution fournie résultante du traitement étant utilisée dans l'étape de modification du format de mise en page de la balise vidéo.

Ainsi, le seul délai apporté par l'adaptation est celui d'un traitement et d'une modification d'un format de mise en page dans une balise vidéo au moyen du résultat du traitement effectués une seule fois pour tout le flux vidéo, suite à la réception de la résolution fournie avec le début du flux vidéo.

Avantageusement, la modification est mise en oeuvre lorsqu'au moins une des dimensions de la taille de la fenêtre d'affichage du client est inférieure à l'une des dimensions de la résolution fournie.

Ainsi, lorsque la taille de la fenêtre d'affichage est plus petite que la résolution fournie, l'affichage temps réel de la vidéo portée par le flux temps réel est réduit pour ne pas dépasser la taille de la fenêtre d'affichage du client.

Avantageusement, lorsqu'au moins une des dimensions de la taille de la fenêtre d'affichage du client est inférieure à l'une des dimensions de la résolution fournie, le format modifié de mise en page de la balise vidéo modifiée est proportionnelle à la résolution fournie, le facteur de proportion fonction du paramètre de précision d'affichage inférieur à 1.

Avantageusement, lorsqu'au moins une des dimensions de la taille de la fenêtre d'affichage du client est inférieure à l'une des dimensions de la résolution fournie, chaque dimension de le format modifié de mise en page de la balise vidéo modifiée est égale à la dimension correspondante de la résolution fournie multipliée par le paramètre de précision d'affichage auquel a été soustrait 1, et divisée par le paramètre de précision d'affichage.

Ainsi, la qualité de la vidéo portée par le flux vidéo est mieux respectée lors de l'affichage de cette vidéo sur une fenêtre d'affichage de taille inférieure à la résolution fournie.

Avantageusement, la modification est mise en oeuvre lorsqu'au moins une des dimensions de la taille de la fenêtre d'affichage du client est supérieure à l'une des dimensions de la résolution fournie.

Ainsi, lorsque la taille de la fenêtre d'affichage est plus petite à la résolution fournie, l'affichage temps réel de la vidéo portée par le flux temps réel est augmentée au début de la lecture du flux vidéo affiché (et sans impact sur celle-ci) pour bénéficier au maximum de la taille de la fenêtre d'affichage du client.

Avantageusement, lorsqu'au moins une des dimensions de la taille de la fenêtre d'affichage du client est supérieure à l'une des dimensions de la résolution fournie, le format modifié de mise en page de la balise vidéo modifiée est proportionnelle à la résolution fournie, le facteur de proportion fonction du paramètre de précision d'affichage supérieur à 1.

Avantageusement, lorsqu'au moins une des dimensions de la taille de la fenêtre d'affichage du client est supérieure à l'une des dimensions de la résolution fournie, chaque dimension de le format modifié de mise en page de la balise vidéo modifiée est égale à la dimension correspondante de la résolution fournie multipliée par le paramètre de précision d'affichage auquel a été ajouté 1, et divisée par le paramètre de précision d'affichage.

Ainsi, la qualité de la vidéo portée par le flux vidéo est mieux respectée lors de l'affichage de cette vidéo sur une fenêtre d'affichage de taille supérieure à la résolution fournie.

Avantageusement, la taille de la fenêtre d'affichage est égale à la taille fournie par le client à laquelle a été soustrait la taille du menu du client et/ou la taille du menu du service fournissant le flux vidéo.

Ainsi, l'affichage vidéo bénéficie au maximum de la fenêtre du client tout en conservant des moyens d'interactions utiles puisqu'il couvre, le cas échéant, des zones de la fenêtre d'affichage non réservées au menu du client et/ou au menu du service utiles durant l'affichage de la vidéo.

En outre, lorsque la taille de la fenêtre d'affichage est inférieure à la résolution fournie, l'affichage de la vidéo se rapproche ainsi de la résolution fournie de l'équipement fournissant le flux vidéo.

Avantageusement, le paramètre de précision d'affichage est un paramètre prédéfini.

Ainsi, le paramètre de précision d'affichage peut être fixé à une valeur donnée telle qu'une valeur, généralement, dans une fourchette de 90 à 1000, en particulier le paramètre de précision d'affichage peut être fixé à 100 quelle que soit la résolution fournie 720pixels ou 1080 pixels.

Avantageusement, le paramètre de précision d'affichage est fonction de la qualité du flux vidéo.

Ainsi, le paramètre de précision d'affichage peut évoluer avec la qualité croissante des équipements. Cela permettra d'avoir que le paramètre de précision d'affichage s'adapte lui-aussi, notamment aux nouveaux équipements 4K.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'affichage et étant conçus pour commander l'exécution des différentes étapes de ce procédé.

L'invention vise donc aussi un programme comprenant des instructions de code de programme pour l'exécution des étapes du procédé d'adaptation lorsque ledit programme est exécuté par un processeur.

Ce programme peut utiliser n'importe quel langage de programmation et être sous la forme de code source, code objet ou code intermédiaire entre code source te code objet tel que dans une forme partiellement compilée ou dans n'importe quelle autre forme souhaitable.

Un objet de l'invention est également un procédé d'affichage d'un flux vidéo par un client. Le procédé d'affichage comporte une adaptation d'un affichage du flux vidéo. L'adaptation met en oeuvre une modification d'un format de mise en page dans une balise vidéo du client, le format de mise en page de la balise vidéo étant apte à configurer le contrôle de format d'affichage du flux vidéo par le client, le format modifié de mise en page de la balise vidéo modifiée étant fonction d'une résolution fournie d'un équipement fournissant le flux vidéo, d'une taille d'une fenêtre d'affichage du flux vidéo et d'un paramètre de précision d'affichage, le format modifié de mise en page de la balise vidéo modifiée ayant une même relation que la résolution fournie à la taille de la fenêtre d'affichage dans laquelle le flux vidéo est affiché par le client.

Un objet de l'invention est aussi un dispositif d'affichage d'un flux vidéo dans une fenêtre d'un client. Le dispositif d'affichage comporte un adaptateur de l'affichage du flux vidéo. L'adaptateur modifie un format de mise en page dans une balise vidéo du client, le format de mise en page de la balise vidéo étant apte à configurer le contrôle de format d'affichage du flux vidéo par le client, le format modifié de mise en page de la balise vidéo modifiée étant fonction d'une résolution fournie d'un équipement fournissant le flux vidéo, d'une taille d'une fenêtre d'affichage du flux vidéo et d'un paramètre de précision d'affichage, le format modifié de mise en page de la balise vidéo modifiée ayant une même relation que la résolution fournie à la taille de la fenêtre d'affichage dans laquelle le flux vidéo est affiché par le client.

Un objet de l'invention est encore un client apte à afficher des flux vidéo. Le client comporte un adaptateur de l'affichage du flux vidéo. L'adaptateur modifie un format de mise en page dans une balise vidéo du client, le format de mise en page de la balise vidéo étant apte à configurer le contrôle de format d'affichage du flux vidéo par le client, le format modifié de mise en page de la balise vidéo modifiée étant fonction d'une résolution fournie d'un équipement fournissant le flux vidéo, d'une taille d'une fenêtre d'affichage du flux vidéo et d'un paramètre de précision d'affichage, le format modifié de mise en page de la balise vidéo modifiée ayant une même relation que la résolution fournie à la taille de la fenêtre d'affichage dans laquelle le flux vidéo est affiché par le client.

Les caractéristiques et avantages de l'invention apparaîtront plus clairement à la lecture de la description, faite à titre d'exemple, et des figures s'y rapportant qui représentent :

- Figure 1, un schéma simplifié d'un procédé d'adaptation d'affichage d'un flux vidéo par un client selon l'invention,
- Figure 2, un schéma simplifié d'un terminal comportant un dispositif d'affichage d'un flux vidéo par un client selon l'invention,

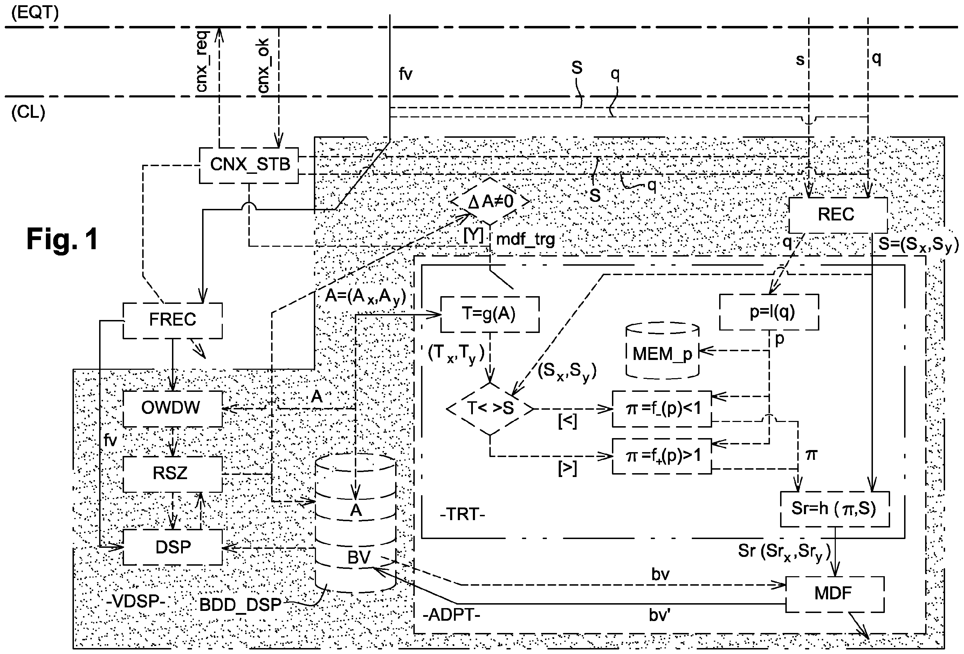

La figure 1 illustre un schéma simplifié d'un procédé d'adaptation d'affichage d'un flux vidéo par un client selon l'invention.

Le procédé d'adaptation ADPT d'affichage d'un flux vidéo fv par un client CL comporte une modification MDF d'une balise vidéo BV du client CL. La balise vidéo modifiée bv' est fonction d'une résolution S d'un équipement EQT fournissant le flux vidéo fv, d'une taille T d'une fenêtre d'affichage du flux vidéo et d'un paramètre de précision $p$. La balise vidéo modifiée *bv'* a une même relation que la résolution S à la taille T de la fenêtre d'affichage dans laquelle le flux vidéo est affiché par le client.

Dans le cas d'un affichage en deux dimensions, la résolution de l'équipement est en deux dimensions $S=(S_x, S_y)$, et la taille de la fenêtre d'affichage aussi $T=(T_x,T_y)$.

En particulier, le procédé d'adaptation comporte, suite à une réception REC d'au moins la résolution S de l'équipement EQT fournissant le flux vidéo fv, un traitement TRT de ladite résolution S en fonction du paramètre de précision $p$, la résolution résultante du traitement Sr étant utilisée dans l'étape de modification MDF de balise vidéo.

En particulier, la balise vidéo modifiée bv' est proportionnelle à la résolution S : bv'=($\pi S_x, \pi S_y$), où $\pi$ est un facteur de proportion fonction du paramètre de précision p : $\pi = f(p)$.

Notamment, la résolution résultante Sr servant à modifier MDF la balise vidéo est proportionnelle à la résolution S : Sr'=h($\pi$, S), où $\pi$ est un facteur de proportion fonction du paramètre de précision p : $\pi = f(p)$ permettant de conserver le ratio de la résolution de l'équipement.

En particulier, la modification MDF est mise en oeuvre lorsqu'au moins une des dimensions de la taille de la fenêtre d'affichage du client est inférieure à l'une des dimensions de la résolution ( T<>S = [<]). Par exemple, si $T_x < S_x$ ou $T_y < S_y$ alors la modification MDF est mise en oeuvre.

Notamment, le procédé d'adaptation comporte une vérification de la relation de la résolution par rapport à la taille T<>S. Lorsque la relation est [<] : la taille T est inférieure à la résolution S, en particulier dans au moins l'une des leurs dimensions, la vérification T<>S déclenche la modification MDF de la balise vidéo.

Dans ce cas d'une relation d'infériorité [<], le facteur de proportion $\pi$ est, par exemple, inférieur à 1.

En particulier, dans ce cas d'une relation d'infériorité [<], chaque dimension de la balise vidéo modifiée (bv'x, bv'y) est égale à la dimension correspondante de la résolution $(S_x, S_y)$ multipliée par le paramètre de précision auquel a été soustrait 1 (p-1), et divisée par le paramètre de précision $p$ :

$$\text{si } T_x < S_x \text{ ou } T_y < S_y,$$

$$\text{alors } bv'x=(p-1)S_x/p \text{ et } bv'y=(p-1)S_y/p$$

$$\text{soit } bv'x= \pi S_x \text{ et } bv'y= \pi S_y \text{ avec } \pi=f(p)= (p-1)/p$$

En particulier, la modification MDF est mise en oeuvre lorsqu'au moins une des dimensions de la taille de la fenêtre d'affichage du client est supérieure à l'une des dimensions de la résolution ( T<>S = [>]). Par exemple, si $T_x > S_x$ ou $T_y > S_y$ alors la modification MDF est mise en oeuvre.

Notamment, le procédé d'adaptation comporte une vérification de la relation de la résolution par rapport à la taille T<>S. Lors que la relation est [>]: la taille T est supérieure à la résolution S, en particulier dans au moins l'une des leurs dimensions, la vérification T<>S déclenche la modification MDF de la balise vidéo.

Dans ce cas d'une relation de supériorité [>], le facteur de proportion $\pi$ est, par exemple, supérieur à 1.

En particulier, dans ce cas d'une relation de supériorité[>], chaque dimension de la balise vidéo modifiée (bv'x, bv'y) est égale à la dimension correspondante de la résolution (Sx, Sy) multipliée par le paramètre de précision auquel a été ajouté 1 (p+1), et divisée par le paramètre de précision $p$ :

$$\text{si } Tx > Sx \text{ ou } Ty > Sy,$$

$$\text{alors } bv'x = (p+1)Sx/p \text{ et } bv'y = (p+1)Sy/p$$

$$\text{soit } bv'x = \pi\, Sx \text{ et } bv'y = \pi\, Sy \text{ avec } \pi = f_+(p) = (p+1)/p$$

En particulier, le paramètre de précision est un paramètre prédéfini, par exemple dans une fourchette de 95 à 1000. Notamment, le paramètre de précision peut être fixé à 100 quel que soit l'équipement EQT fournissant un flux vidéo avec une qualité VGA de l'ordre de 720 pixels, mais aussi de l'ordre de 1080p, ou encore pour des qualités moins courantes, telles que 4 :3.

L'optimisation de l'affichage à la fois en termes de taille, de déformation et de qualité d'affichage semble obtenue pour un paramètre de précision p fixé à une valeur d'environ 100. Pour augmenter la qualité de l'affichage, le paramètre de précision p sera fixé à une valeur supérieure, notamment à 1000.

Notamment, le paramètre de précision $p$ prédéfini est lu d'une mémoire MEM_p.

En particulier, le paramètre de précision $p$ est fonction de la qualité q du flux vidéo fv : p=I(q). Ainsi, la modification MDF est aussi fonction de la qualité q du flux vidéo fv. Ainsi, la modification ne sera pas la même en fonction de la qualité de l'équipement EQT fournissant le flux vidéo fv: Par exemple, pour un premier équipement EQT1 de qualité VGA 720p, le paramètre de précision $p$ prendra une valeur de 100 et pour un deuxième équipement EQT2 de qualité 4K, le paramètre de précision $p$ passera automatiquement à une autre valeur, par exemple 4000.

Un mode de réalisation du procédé d'adaptation ADPT est un programme comprenant des instructions de code de programme pour l'exécution des étapes du procédé d'adaptation lorsque ledit programme est exécuté par un processeur.

Soit, le procédé d'adaptation ADPT est intégré dans un procédé d'affichage VDSP: Le procédé d'affichage VDSP d'un flux vidéo fv par un client CL comporte alors l' adaptation ADPT d'un affichage du flux vidéo. L'adaptation ADPT met en oeuvre une modification MDF d'une balise vidéo bv du client CL. La balise vidéo modifiée bv' est fonction d'une résolution S d'un équipement EQT fournissant le flux vidéo fv, d'une taille T d'une fenêtre d'affichage du flux vidéo et d'un paramètre de précision p. La balise vidéo modifiée *bv'* a une même relation que la résolution S à la taille S de la fenêtre d'affichage dans laquelle le flux vidéo est affiché par le client.

Soit le procédé d'adaptation ADPT échange avec le procédé d'affichage VSDP (exemple non illustré), le procédé d'affichage fournissant la taille T de la fenêtre d'affichage et le procédé d'adaptation la balise vidéo modifiée bv' soit directement soit indirectement, par exemple par inscription dans une base de données d'affichage BDD_A comportant la taille A de la fenêtre client dont est fonction la taille T de la fenêtre d'affichage, la balise vidéo BV, ...

En particulier, le procédé d'affichage comporte une ouverture de la fenêtre d'affichage OWDW dans laquelle le flux vidéo fv reçu par le client CL sera affichée. Notamment, l'ouverture de la fenêtre lit la taille de la fenêtre client A, soit A=(Ax,Ay) pour un affichage en deux dimension, dans une base de données d'affichage BDD_A.

En particulier, le procédé d'affichage comporte un affichage DSP de la vidéo portée par le flux vidéo fv reçu par le client CL en fonction de la balise vidéo, notamment la balise vidéo BV lue dans une base de données d'affichage BDD_A ou directement fournie bv' par le procédé d'adaptation ADPT.

En particulier, le procédé d'affichage comporte une modification de la taille de la fenêtre d'affichage RSZ préalablement ou pendant l'affichage DSP. La nouvelle taille A de la fenêtre client et/ou la nouvelle taille M du menu du client et/ou la nouvelle taille W du menu du service mis en oeuvre par l'équipement EQT fournissant le flux vidéo fv sont soit fournies directement au procédé d'adaptation ADAPT, soit inscrit dans une base de données d'affichage BDD_A.

En particulier, une détection de changement de taille $\Delta A \neq 0$ ? déclenche *mdf_trg* soit, de manière générale, l'adaptation ADPT, soit, plus particulièrement, la modification MDF. Dans le cas où c'est la modification MDF qui est déclenchée, la modification MDF comporte le traitement TRT (non illustré) ou déclenche ce traitement TRT.

Par exemple, la détection de changement de taille $\Delta A \neq 0$ ? est intégrée soit dans l'adaptation ADPT (non illustré), soit dans le procédé d'affichage VSDP. Notamment, la détection de changement de taille $\Delta A \neq 0$ ? comporte une sur-

veillance de la fenêtre d'affichage et/ou de la modification de taille RSZ et/ou de la taille A inscrite dans la base de données d'affichage BDD_A.

En particulier, la taille de la fenêtre d'affichage T servant à l'adaptation ADPT est fonction de la taille de la fenêtre client A : T=g(A). Notamment, lorsque certains menus sont utiles lors d'un affichage vidéo, il peut être envisagé que l'affichage ne se fasse pas sur la totalité de la fenêtre client mais seulement une partie de la fenêtre client laissant de l'espace à l'affichage d'un ou plusieurs menus tels que le menu du client et/ou le menu du service de flux vidéo. Alors la taille T de la fenêtre d'affichage correspond à la taille de la fenêtre client A diminué de la taille du menu client M et/ou de la taille du menu du service W, soit en cas d'affichage en deux dimensions : Tx=Ax-Mx-Wx et Ty=Ay-My-Wy.

Un mode de réalisation du procédé d'affichage VDSP est un programme comprenant des instructions de code de programme pour l'exécution des étapes du procédé d'affichage lorsque ledit programme est exécuté par un processeur.

En particulier, un procédé client de service de flux vidéo comporte un établissement CNX_STB d'une connexion du client CL avec un équipement EQT fournissant des flux vidéo, voire fournissant le service de flux vidéo. Par exemple, l'établissement de connexion CNX_STB mis en oeuvre par le client CL envoie une requête de connexion *cnx_req* à l'équipement EQT déclenchant la connexion.

Notamment, la connexion n'est pas déclenchée tant que l'établissement CNX_STB d'une connexion n'a pas reçu un accord de connexion *cnx_ok* ou un accusé réception de demande de connexion (non illustré) en provenance de l'équipement EQT.

La connexion ou plus particulièrement l'établissement de la connexion CNX_STB déclenche mdf_trg en parallèle la mise en oeuvre du procédé d'adaptation ADPT et/ou de la modification MDF de la balise vidéo. Dans le cas où c'est la modification MDF qui est déclenchée, la modification MDF comporte le traitement TRT (non illustré) ou déclenche ce traitement TRT.

La résolution S et/ou la qualité q de l'équipement EQT est reçu REC soit par le procédé client, soit au sein du procédé d'adaptation ADPT. En particulier, l'établissement de la connexion CNX_STB récupère auprès de l'équipement EQT la résolution S et/ou la qualité q et les fournissent au procédé d'adaptation ADPT.

Une fois la connexion établie CNX_STB, le procédé client comporte une réception d'un flux vidéo FREC qui déclenche le procédé d'affichage VDSP pour afficher le flux vidéo *fv* reçu.

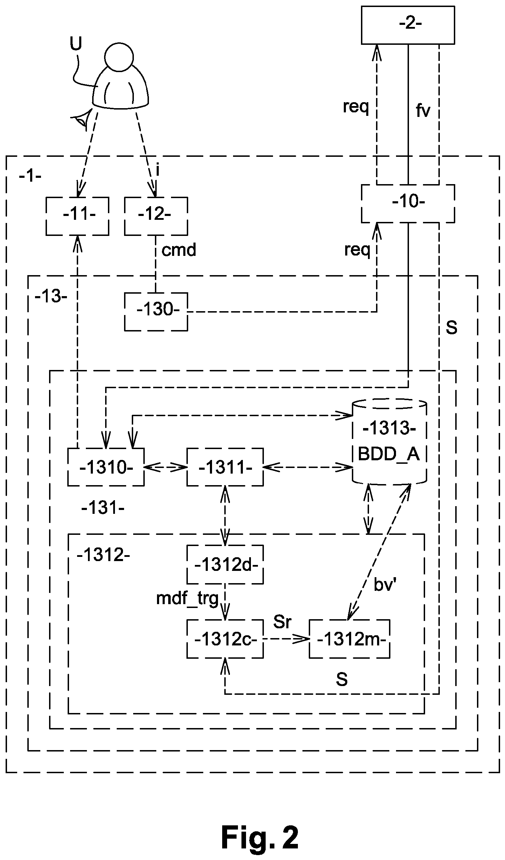

La figure 2 illustre un schéma simplifié d'un terminal 1 comportant un dispositif d'affichage 131 d'un flux vidéo fv par un dispositif client 13 selon l'invention.

Le dispositif d'affichage 131 d'un flux vidéo *fv* dans une fenêtre d'un dispositif client 13 comporte un adaptateur 1312 de l'affichage du flux vidéo. L'adaptateur 1312 modifie une balise vidéo du client. La balise vidéo modifiée est fonction d'une résolution d'un équipement 2fournissant le flux vidéo (tel qu'un serveur de streaming vidéo), d'une taille d'une fenêtre d'affichage du flux vidéo et d'un paramètre de précision. La balise vidéo modifiée a une même relation que la résolution à la taille de la fenêtre d'affichage dans laquelle le flux vidéo est affiché par le client.

En particulier, l'adaptateur 1312 comporte un module de modification 1312m de la balise vidéo en fonction d'une résolution d'un équipement 2 fournissant le flux vidéo (tel qu'un serveur de streaming vidéo), d'une taille d'une fenêtre d'affichage du flux vidéo et d'un paramètre de précision. Le module de modification 1312m fournit la balise vidéo modifiée bv' au dispositif d'affichage 131 directement (non illustré) ou indirectement, notamment en l'inscrivant dans une base de données d'affichage 1313.

En particulier, l'adaptateur 1312 comporte un module de traitement 1312c intégré (non illustré) ou non dans le module de modification 1312m. Le module de traitement 1312c reçoit ou récupère la résolution S de l'équipement 2, directement ou indirectement auprès de l'équipement 2 notamment au moyen de l'émetteur/récepteur 10 d'un terminal 1 comportant le dispositif client 13. Le module de traitement 1312c calcule une résolution résultante Sr fonction de la résolution S de l'équipement 2, d'un paramètre de précision p et de la taille de la fenêtre d'affichage T. Le module de traitement 1312c fournit la résolution résultante Sr au module de modification 1312m.

En particulier, l'adaptateur 1312 comporte un module de surveillance 1312d surveillant la fenêtre d'affichage, en particulier la taille de la fenêtre d'affichage. Le module de surveillance 1312d déclenche, directement ou non, le module de modification 1312m lors d'une modification de la fenêtre de surveillance. Soit le module de surveillance 1312d déclenche le module de calcul 1312c qui déclenche le module de modification en fournissant la résolution résultante Sr. Soit le module de surveillance 1312d déclenche le module de traitement 1312m qui déclenche éventuellement le module de traitement 1312m. Etc.

En particulier, le dispositif d'affichage 131 comporte un module d'affichage 1310 recevant le flux vidéo fv et affichant la vidéo portée par ce flux vidéo dans la fenêtre d'affichage du client en fonction au moins d'une balise vidéo bv lue notamment dans une base de données d'affichage 1313. Ainsi, lorsque la balise vidéo inscrite dans la base de données 1313 est la balise vidéo modifiée inscrite par l'adaptateur 1312, l'affichage de la vidéo est optimisé en termes de taille, de déformation et de qualité.

En particulier, le dispositif d'affichage 131 comporte un module de gestion de fenêtre client 1311. Les modules d'affichage 1310 et de gestion de fenêtre 1311 échange de tel sorte que la vidéo portée par le flux soit affichée dans la zone de la fenêtre dédié à l'affichage de la vidéo. Notamment, le dispositif de gestion de fenêtre 1311 lit et/ou inscrit la taille de la fenêtre client A et/ou la taille du menu client M et/ou la taille du menu du service W de/dans la base de données 1313.

En particulier, un client 13 apte à afficher des flux vidéo *fv* comporte l'adaptateur 1312 de l'affichage du flux vidéo. Notamment, le client 13 comporte le dispositif d'affichage 131 comportant l'adaptateur 1312.

En particulier, le client 13 comporte un module de requête 130 recevant des commandes cmd d'interaction d'un utilisateur U avec un terminal 1 et émettant des requêtes req vers au moins un dispositif de flux vidéo 2, tel qu'un serveur de streaming vidéo. Les requêtes req sont notamment des requêtes de connexion au dispositif de flux vidéo 2, et/ou des requêtes de catalogues de flux vidéo et/ou des requêtes de flux vidéo, etc. Ces requêtes sont notamment transmises au moyen de l'émetteur/récepteur 10 du terminal 1.

Les requêtes req sont notamment des requêtes de modification de la taille de la fenêtre client A par l'utilisateur U qui sont transmises au module de gestion de fenêtre 1311. En particulier, le module de surveillance 1312d de l'adaptateur 1312 échange et/ou surveille le module de gestion de fenêtre 1311 du dispositif d'affichage.

En particulier, un utilisateur U dispose d'un terminal U pour accéder à des vidéos proposées par un serveur distant 2 aussi nommé dispositif de fourniture de service de flux vidéo. Le terminal 1 est un terminal de communication comportant un émetteur/récepteur 10 permettant au terminal 1 d'échanger notamment avec le dispositif de fourniture de service de flux vidéo 2.

En particulier, le terminal 1 comporte un afficheur, tel qu'un écran, 11 et une interface utilisateur 12, tel que l'écran lorsqu'il est tactile ou un clavier, une souris, une caméra, un microphone, etc.

L'utilisateur U interagit avec l'interface utilisateur 12 notamment pour commander cmd la connexion du dispositif client 13, notamment intégré dans le terminal 1, avec le dispositif de fourniture de service de flux vidéo 2, puis, éventuellement, la diffusion d'un flux vidéo.

La vidéo portée par le flux vidéo émis par le dispositif de fourniture de service de flux vidéo 2 sera affiché sur l'écran 2 pour l'utilisateur U de manière optimale en termes de taille, déformation et qualité d'affichage car l'écran 2 est contrôlé par le dispositif d'affichage 131 comportant un adaptateur 1312 selon l'invention.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Procédé d'adaptation d'affichage d'un flux vidéo (fv) par un client (CL), le procédé d'adaptation (ADPT), pendant l'affichage (DSP) par le client (CL) d'un flux vidéo (fv) reçu d'un équipement (EQT) fournissant le flux vidéo (fv) avec une résolution fournie (S), comporte une modification (MDF) d'un format de mise en page dans une balise vidéo (*bv*) du client (CL), le format de mise en page de la balise vidéo (bv) étant apte à configurer le contrôle de format d'affichage du flux vidéo (fv) par le client (CL) dans une fenêtre d'affichage du client, le format modifié de mise en page de la balise vidéo modifiée (*bv'*) étant fonction :

   - d'une résolution de l'équipement (EQT) fournissant le flux vidéo *(fv),* dite résolution fournie (S);
   - d'une taille (T) de la fenêtre d'affichage du client (CL) dans laquelle le flux vidéo (fv) est affiché, la fenêtre d'affichage du client étant surveillée (1312d), et
   - d'un paramètre (p) de précision d'affichage,

   le format modifié de mise en page de la balise vidéo modifiée (*bv'*), inscrit dans une base de données d'affichage pour consultation, ayant une même relation que la résolution fournie (S) à la taille (T) de la fenêtre d'affichage dans laquelle le flux vidéo *(fv)* est affiché par le client (CL), où l'adaptation de l'affichage du flux vidéo est également déclenchée lors qu'une modification de la fenêtre d'affichage est détectée par l'action de surveillance.

2. Procédé d'adaptation selon la revendication précédente **caractérisé en ce que** le procédé d'adaptation (ADPT) comporte, suite à une réception REC d'au moins la résolution fournie (S) de l'équipement (EQT) fournissant le flux vidéo (fv), un traitement TRT de ladite résolution fournie (S) en fonction du paramètre *p* de précision d'affichage, la résolution Sr résultante du traitement étant utilisée dans l'étape de modification (MDF) du format de mise en page de la balise vidéo *(bv)*.

3. Procédé d'adaptation selon la revendication précédente, **caractérisé en ce que** la modification (MDF) est mise en œuvre lorsqu'au moins une des dimensions de la taille (T) de la fenêtre d'affichage du client est inférieure à l'une des dimensions de la résolution fournie (S).

4. Procédé d'adaptation selon la revendication précédente, **caractérisé en ce que** le format modifié de mise en page de la balise vidéo modifiée (bv') est proportionnel à la résolution fournie (S), le facteur de proportion $\pi$ fonction du paramètre *p* de précision d'affichage étant inférieur à 1.

5. Procédé d'adaptation selon l'une quelconque des revendications 3 ou 4, **caractérisé en ce que** chaque dimension du format modifié de mise en page de la balise vidéo modifiée (bv'=(bv'x,bv'y)) est égal à la dimension correspondante de la résolution fournie (S=(Sx, Sy)) multipliée par le paramètre *p* de précision d'affichage auquel a été soustrait 1, et divisée par le paramètre *p* de précision d'affichage.

6. Procédé d'adaptation selon l'une quelconque des revendications précédentes, **caractérisé en ce que** la modification (MDF) est mise en oeuvre lorsqu'au moins une des dimensions de la taille de la fenêtre d'affichage (T=(Tx,Ty)) du client (CL) est supérieure à l'une des dimensions de la résolution fournie (S=(Sx, Sy)).

7. Procédé d'adaptation selon la revendication précédente, **caractérisé en ce que** le format modifié de mise en page de la balise vidéo modifiée *(bv')* est proportionnel à la résolution fournie (S), le facteur de proportion étant fonction du paramètre de précision d'affichage supérieur à 1.

8. Procédé d'adaptation selon l'une quelconque des revendications 6 ou 7, **caractérisé en ce que** chaque dimension du format modifié de mise en page de la balise vidéo modifiée (bv') est égal à la dimension correspondante de la résolution multipliée par le paramètre de précision auquel a été ajouté 1, et divisée par le paramètre de précision.

9. Procédé d'adaptation selon l'une quelconque des revendications précédentes, **caractérisé en ce que** la taille (T) de la fenêtre d'affichage est égale à la taille (A) fournie par le client (CL) à laquelle a été soustrait la taille (M) du menu du client (CL) et/ou la taille (W) du menu du service fournissant le flux vidéo (fv).

10. Procédé d'adaptation selon l'une quelconque des revendications précédentes **caractérisé en ce que** le paramètre de précision d'affichage est un paramètre prédéfini.

11. Procédé d'adaptation selon l'une quelconque des revendications 1 à 9 **caractérisé en ce que** le paramètre de précision d'affichage est fonction de la qualité du flux vidéo (fv).

12. Programme comprenant des instructions de code de programme pour l'exécution des étapes du procédé d'adaptation selon l'une quelconque des revendications précédentes lorsque ledit programme est exécuté par un processeur.

13. Procédé d'affichage d'un flux vidéo *(fv)* par un client (CL), le procédé d'affichage (VDSP) comportant :

    - un affichage (DSP) par le client (CL) d'un flux vidéo (fv) reçu d'un équipement (EQT) fournissant le flux vidéo (fv) avec une résolution fournie (S), et **caractérisé en ce que** le procédé d'affichage (VDSP) comporte :

        - pendant l'affichage (DSP), une adaptation (ADPT) de l'affichage du flux vidéo (fv), l'adaptation (ADPT) mettant en oeuvre une modification (MDF) du format de mise en page dans une balise vidéo *(bv)* du client (CL), le format de mise en page de la balise vidéo (bv) étant apte à configurer le contrôle de format d'affichage du flux vidéo *(fv)* par le client (CL), le format modifié de mise en page de la balise vidéo modifiée étant fonction de la résolution fournie (S) de l'équipement (EQT) fournissant le flux vidéo (fv), d'une taille (T) de la fenêtre d'affichage du client (CL) dans laquelle le flux vidéo (fv) est affiché, la fenêtre d'affichage du client étant surveillée (1312d),

et d'un paramètre de précision d'affichage, le format modifié de mise en page de la balise vidéo modifiée, inscrite dans une base de données d'affichage pour consultation, ayant une même relation que la résolution de fourniture à la taille (T) de la fenêtre d'affichage dans laquelle le flux vidéo (fv) est affiché par le client (CL), où l'adaptation de l'affichage du flux vidéo est également déclenchée lors qu'une modification de la fenêtre d'affichage est détectée par l'action de surveillance.

14. Dispositif d'affichage d'un flux vidéo (fv) dans une fenêtre d'un client (13), le dispositif d'affichage (131) comporte un adaptateur (1312) de l'affichage du flux vidéo (*fv*), l'adaptateur (1312) modifiant, pendant l'affichage par le client (13) d'un flux vidéo (fv) reçu d'un équipement (2) fournissant le flux vidéo (fv) avec une résolution fournie (S), un format de mise en page dans une balise vidéo (bv) du client (13), le format de mise en page de la balise vidéo (bv) étant apte à configurer le contrôle de format d'affichage du flux vidéo (fv) par le client (13), le format modifié de mise en page de la balise vidéo modifiée (bv') étant fonction de la résolution fournie (S) de l'équipement (2) fournissant le flux vidéo (fv), d'une taille de la fenêtre d'affichage du flux vidéo (*fv*), la fenêtre d'affichage du client configurée pour la surveillance (1312d), et d'un paramètre de précision d'affichage, le format modifié de mise en page de la balise vidéo modifiée (*bv'*), inscrite dans une base de données d'affichage pour consultation, ayant une même relation que la résolution fournie (S) à la taille de la fenêtre d'affichage dans laquelle le flux vidéo (fv) est affiché par le client (13), où l'adaptation de l'affichage du flux vidéo est également déclenchée lors qu'une modification de la fenêtre d'affichage est détectée par l'action de surveillance.

15. Client (13) apte à afficher des flux vidéo (fv) comportant :

- un dispositif d'affichage (131) d'un flux vidéo (fv) dans une fenêtre du client (13), le flux vidéo (fv) ayant été reçu d'un équipement (2) fournissant le flux vidéo (fv) avec une résolution fournie (S), et **caractérisé en ce que** le client (13) comporte :

- un adaptateur (1312) de l'affichage du flux vidéo (fv), l'adaptateur (1312) modifiant, pendant l'affichage, un format de mise en page dans une balise vidéo (bv) du client (13), le format de mise en page de la balise vidéo (bv) étant apte à configurer le contrôle de format d'affichage du flux vidéo *(fv)* par le client (13), le format modifié de mise en page de la balise vidéo modifiée (bv') étant fonction de la résolution fournie (S) d'un équipement (2) fournissant le flux vidéo *(fv),* d'une taille de la fenêtre d'affichage du flux vidéo (*fv*), la fenêtre d'affichage du client configurée pour la surveillance (1312d), et d'un paramètre de précision d'affichage, le format modifié de mise en page de la balise vidéo (*bv'*) modifiée, inscrite dans une base de données d'affichage pour consultation, ayant une même relation que la résolution fournie (S) à la taille de la fenêtre d'affichage dans laquelle le flux vidéo (fv) est affiché par le client (13), où l'adaptation de l'affichage du flux vidéo est également déclenchée lors qu'une modification de la fenêtre d'affichage est détectée par l'action de surveillance.

**Patentansprüche**

1. Verfahren zum Anpassen der Anzeige eines Videostroms *(fv)* durch einen Client (CL), wobei das Anpassungsverfahren (ADPT), während des Anzeigens (DSP) durch den Client (CL) eines Videostroms *(fv)*, der von einer den Videostrom (fv) mit einer bereitgestellten Auflösung (S) bereitstellenden Einrichtung (EQT) empfangen wird, Ändern (MDF) eines Einstellungsformats in einem Video-Element (bv) des Clients (CL) umfasst, wobei das Einstellungsformat des Video-Elements (bv) geeignet ist, die Anzeigeformatsteuerung des Videostroms (fv) durch den Client (CL) in einem Anzeigefenster des Clients zu konfigurieren, wobei das geänderte Einstellungsformat des geänderten Video-Elements (bv') abhängig ist:

- von einer Auflösung der den Videostrom (fv) bereitstellenden Einrichtung (EQT), bereitgestellte Auflösung (S) genannt;
- von einer Größe (T) des Anzeigefensters des Clients (CL), in dem der Videostrom (fv) angezeigt wird, wobei das Anzeigefenster des Clients überwacht wird (1312d), und
- von einem Anzeigegenauigkeitsparameter *(p)*, wobei das geänderte Einstellungsformat des geänderten Video-Elements (bv'), das in eine Anzeigedatenbank zur Abfrage eingetragen ist, ein gleiches Verhältnis hat wie die bereitgestellte Auflösung (S) zu der Größe (T) des Anzeigefensters, in dem der Videostrom (fv) durch den Client (CL) angezeigt wird, wobei das Anpassen der Anzeige des Videostroms auch ausgelöst wird, wenn eine Änderung des Anzeigefensters durch die Überwachungsaktion detektiert wird.

2. Anpassungsverfahren nach dem vorhergehenden Anspruch, **dadurch gekennzeichnet, dass** das Anpassungsverfahren (ADPT), nach einem Empfangen REC mindestens der bereitgestellten Auflösung (S) der den Videostrom (fv) bereitstellenden Einrichtung (EQT), eine Verarbeitung TRT der bereitgestellten Auflösung (S) in Abhängigkeit von dem Anzeigegenauigkeitsparameter $p$ umfasst, wobei die aus der Verarbeitung resultierende Auflösung Sr in dem Schritt des Änderns (MDF) des Einstellungsformats des Video-Elements (bv) verwendet wird.

3. Anpassungsverfahren nach dem vorhergehenden Anspruch, **dadurch gekennzeichnet, dass** das Ändern (MDF) durchgeführt wird, wenn mindestens eine der Abmessungen der Größe (T) des Anzeigefensters des Clients kleiner als eine der Abmessungen der bereitgestellten Auflösung (S) ist.

4. Anpassungsverfahren nach dem vorhergehenden Anspruch, **dadurch gekennzeichnet, dass** das geänderte Einstellungsformat des geänderten Video-Elements (bv') proportional zu der bereitgestellten Auflösung (S) ist, wobei der Proportionsfaktor $\pi$, der abhängig von dem Anzeigegenauigkeitsparameter $p$ ist, kleiner als 1 ist.

5. Anpassungsverfahren nach einem der Ansprüche 3 oder 4, **dadurch gekennzeichnet, dass** jede Abmessung des geänderten Einstellungsformats des geänderten Video-Elements (bv'=(bv'x,bv'y)) gleich der entsprechenden Abmessung der bereitgestellten Auflösung (S=(Sx, Sy)), multipliziert mit dem Anzeigegenauigkeitsparameter $p$ , von dem 1 subtrahiert wurde, und dividiert durch den Anzeigegenauigkeitsparameter $p$ , ist.

6. Anpassungsverfahren nach einem der vorhergehenden Ansprüche, **dadurch gekennzeichnet, dass** das Ändern (MDF) durchgeführt wird, wenn mindestens eine der Abmessungen der Größe des Anzeigefensters (T=(Tx,Ty)) des Clients (CL) größer als eine der Abmessungen der bereitgestellten Auflösung (S=(Sx, Sy)) ist.

7. Anpassungsverfahren nach dem vorhergehenden Anspruch, **dadurch gekennzeichnet, dass** das geänderte Einstellungsformat des geänderten Video-Elements (bv') proportional zu der bereitgestellten Auflösung (S) ist, wobei der Proportionsfaktor abhängig von dem Anzeigegenauigkeitsparameter größer als 1 ist.

8. Anpassungsverfahren nach einem der Ansprüche 6 oder 7, **dadurch gekennzeichnet, dass** jede Abmessung des geänderten Einstellungsformats des geänderten Video-Elements (bv') gleich der entsprechenden Abmessung der Auflösung, multipliziert mit dem Anzeigegenauigkeitsparameter, zu dem 1 addiert wurde, und dividiert durch den Genauigkeitsparameter, ist.

9. Anpassungsverfahren nach einem der vorhergehenden Ansprüche, **dadurch gekennzeichnet, dass** die Größe (T) des Anzeigefensters gleich der von dem Client (CL) bereitgestellten Größe (A) ist, von der die Größe (M) des Menüs des Clients (CL) und/oder die Größe (W) des Menüs des den Videostrom (fv) bereitstellenden Dienstes subtrahiert worden ist.

10. Anpassungsverfahren nach einem der vorhergehenden Ansprüche, **dadurch gekennzeichnet, dass** der Anzeigegenauigkeitsparameter ein vorgegebener Parameter ist.

11. Anpassungsverfahren nach einem der Ansprüche 1 bis 9, **dadurch gekennzeichnet, dass** der Anzeigegenauigkeitsparameter abhängig von der Qualität des Videostroms (fv) ist.

12. Programm, das Programmcodeanweisungen umfasst, die bei der Ausführung des Programms durch einen Prozessor die Schritte des Anpassungsverfahrens nach einem der vorhergehenden Ansprüche ausführen.

13. Anzeigeverfahren zum Anzeigen eines Videostroms (fv) durch einen Client (CL), wobei das Anzeigeverfahren (VDSP) umfasst:

- ein Anzeigen (DSP) durch den Client (CL) eines Videostroms *(fv)*, der von einer den Videostrom *(fv)* mit einer bereitgestellten Auflösung (S) bereitstellenden Einrichtung (EQT) empfangen wird, und **dadurch gekennzeichnet, dass** das Anzeigeverfahren (VDSP) umfasst:

- während des Anzeigens (DSP), ein Anpassen (ADPT) der Anzeige des Videostroms (fv), wobei das Anpassen (ADPT) eine Änderung (MDF) des Einstellungsformats in einem Video-Element (bv) des Clients (CL) ausführt, wobei das Einstellungsformat des Video-Elements (*bv*) geeignet ist, die Anzeigeformatsteuerung des Videostroms (*fv*) durch den Client (CL) zu konfigurieren, wobei das geänderte Einstellungsformat des geänderten Video-Elements abhängig ist von der bereitgestellten Auflösung (S) der den Videostrom (*fv*) bereitstellenden Einrichtung (EQT), von einer Größe (T) des Anzeigefensters des Clients (CL), in dem der Videostrom (*fv*) angezeigt wird, wobei das Anzeigefenster des Clients überwacht wird (1312d),

und von einem Anzeigegenauigkeitsparameter, wobei das geänderte Einstellungsformat des geänderten Video-Elements, das in eine Anzeigedatenbank zur Abfrage eingetragen ist, ein gleiches Verhältnis hat wie die Bereitstellungsauflösung zu der Größe (T) des Anzeigefensters, in dem der Videostrom (*fv*) durch den Client (CL) angezeigt wird, wobei das Anpassen der Anzeige des Videostroms auch ausgelöst wird, wenn eine Änderung des Anzeigefensters durch die Überwachungsaktion detektiert wird.

14. Anzeigevorrichtung zum Anzeigen eines Videostroms (*fv*) in einem Fenster eines Clients (13),

wobei die Anzeigevorrichtung (131) einen Adapter (1312) für die Anzeige des Videostroms (*fv*) umfasst, wobei der Adapter (1312), während des Anzeigens durch den Client (13) eines Videostroms (*fv*), der von einer den Videostrom (*fv*) mit einer bereitgestellten Auflösung (S) bereitstellenden Einrichtung (2) empfangen wird, ein Einstellungsformat in einem Video-Element (*bv*) des Clients (13) ändert, wobei das Einstellungsformat des Video-Elements (*bv*) geeignet ist, die Anzeigeformatsteuerung des Videostroms (*fv*) durch den Client (13) zu konfigurieren, wobei das änderte Einstellungsformat des geänderten Video-Elements (*bv'*) abhängig ist von der bereitgestellten Auflösung (S) der den Videostrom (*fv*) bereitstellenden Einrichtung (2), von einer Größe des Anzeigefensters des Videostroms (*fv*), wobei das Anzeigefenster des Clients für die Überwachung (1312d) konfiguriert ist,

und von einem Anzeigegenauigkeitsparameter, wobei das geänderte Einstellungsformat des geänderten Video-Elements (*bv'*), das in eine Anzeigedatenbank zur Abfrage eingetragen ist, ein gleiches Verhältnis hat wie die bereitgestellte Auflösung (S) zu der Größe des Anzeigefensters, in dem der Videostrom (*fv*) durch den Client (13) angezeigt wird, wobei das Anpassen der Anzeige des Videostroms auch ausgelöst wird, wenn eine Änderung des Anzeigefensters durch die Überwachungsaktion detektiert wird.

15. Client (13), der geeignet ist, Videoströme (*fv*) anzuzeigen, umfassend:

- eine Anzeigevorrichtung (131) zum Anzeigen eines Videostroms (*fv*) in einem Fenster des Clients (13), wobei der Videostrom (*fv*) von einer Einrichtung (2) empfangen worden ist, die den Videostrom (*fv*) mit einer bereitgestellten Auflösung (S) bereitstellt, und **dadurch gekennzeichnet, dass** der Client (13) umfasst:

- einen Adapter (1312) für die Anzeige des Videostroms (*fv*), wobei der Adapter (1312), während des Anzeigens, ein Einstellungsformat in einem Video-Element (bv) des Clients (13) ändert, wobei das Einstellungsformat des Video-Elements (*bv*) geeignet ist, die Anzeigeformatsteuerung des Videostroms (*fv*) durch den Client (13) zu konfigurieren, wobei das geänderte Einstellungsformat des geänderten Video-Elements (bv') abhängig ist von der bereitgestellten Auflösung (S) einer den Videostrom (*fv*) bereitstellenden Einrichtung (2), von einer Größe des Anzeigefensters des Videostroms (*fv*), wobei das Anzeigefenster des Clients zur Überwachung (1312d) konfiguriert ist, und von einem Anzeigegenauigkeitsparameter, wobei das geänderte Einstellungsformat des geänderten Video-Elements (bv'), das in eine Anzeigedatenbank zur Abfrage eingetragen ist, ein gleiches Verhältnis hat wie die bereitgestellte Auflösung (S) zu der Größe des Anzeigefensters, in dem der Videostrom (*fv*) durch den Client (13) angezeigt wird, wobei das Anpassen der Anzeige des Videostroms auch ausgelöst wird, wenn eine Änderung des Anzeigefensters durch die Überwachungsaktion detektiert wird.

## Claims

1. Method for adapting the display of a video stream (*fv*) by a client (CL), the adapting method (ADPT), during the display (DSP) by the client (CL) of a video stream (*fv*) received from an equipment (EQT) supplying the video stream (*fv*) at a supplied resolution (S), comprising modifying (MDF) a setting format in a video element (bv) of the client (CL), the setting format of the video element (*bv*) being capable of configuring control of the display format of the video stream (*fv*) by the client (CL) in a display window of the client, the modified setting format of the modified video element (bv') being a function of:

- a resolution of the equipment (EQT) supplying the video stream (*fv*), referred to as the supplied resolution (S) ;

- a size (T) of the display window of the client (CL) in which the video stream (*fv*) is displayed, the display window of the client being monitored (1312d), and
- a display accuracy parameter *(p)*,

the modified setting format of the modified video element (*bv'*), written to a display database for consultation, having the same relationship as the supplied resolution (S) to the size (T) of the display window in which the video stream (*fv*) is displayed by the client (CL), where adapting display of the video stream is also triggered when a modification of the display window is detected by the monitoring action.

2. Adapting method according to the preceding claim, **characterized in that** the adapting method (ADPT) comprises, following receipt REC of at least the supplied resolution (S) of the equipment (EQT) supplying the video stream (*fv*), processing TRT said supplied resolution (S) depending on the display accuracy parameter *p*, the resolution Sr resulting from the processing being used in the step (MDF) of modifying the setting format of the video element (bv) .

3. Adapting method according to the preceding claim, **characterized in that** modifying (MDF) is implemented when at least one of the dimensions of the size (T) of the display window of the client is less than one of the dimensions of the supplied resolution (S).

4. Adapting method according to the preceding claim, **characterized in that** the modified setting format of the modified video element (*bv'*) is proportional to the supplied resolution (S), the proportion factor $\pi$ dependent on the display accuracy parameter *p* being less than 1.

5. Adapting method according to either one of Claims 3 and 4, **characterized in that** each dimension of the modified setting format of the modified video element (bv'=(bv'x,bv'y)) is equal to the corresponding dimension of the supplied resolution (S=(Sx, Sy)) multiplied by the display accuracy parameter *p* from which 1 has been subtracted, and divided by the display accuracy parameter *p*.

6. Adapting method according to any one of the preceding claims, **characterized in that** modifying (MDF) is implemented when at least one of the dimensions of the size of the display window (T=(Tx,Ty)) of the client (CL) is greater than one of the dimensions of the supplied resolution (S=(Sx, Sy)).

7. Adapting method according to the preceding claim, **characterized in that** the modified setting format of the modified video element (*bv'*) is proportional to the supplied resolution (S), the proportion factor being dependent on the display accuracy parameter greater than 1.

8. Adapting method according to either one of Claims 6 and 7, **characterized in that** each dimension of the modified setting format of the modified video element (*bv'*) is equal to the corresponding dimension of the resolution multiplied by the accuracy parameter to which 1 has been added, and divided by the accuracy parameter.

9. Adapting method according to any one of the preceding claims, **characterized in that** the size (T) of the display window is equal to the size (A) supplied by the client (CL) minus the size (M) of the menu of the client (CL) and/or the size (W) of the menu of the service supplying the video stream (*fv*).

10. Adapting method according to any one of the preceding claims, **characterized in that** the display accuracy parameter is a predefined parameter.

11. Adapting method according to any one of Claims 1 to 9, **characterized in that** the display accuracy parameter is dependent on the quality of the video stream (fv).

12. Program comprising program code instructions for executing the steps of the adapting method according to any one of the preceding claims when said program is executed by a processor.

13. Method for displaying a video stream (fv) by a client (CL), the displaying method (VDSP) comprising:

- display (DSP) by the client (CL) of a video stream (fv) received from an equipment (EQT) supplying the video stream *(fv)* with a supplied resolution (S), and **characterized in that** the displaying method (VDSP) comprises:
- during display (DSP), adapting (ADPT) display of the video stream (fv), the adapting (ADPT) implementing modifying (MDF) of the setting format in a video element (bv) of the client (CL), the setting format of the video element (*bv*) being capable of configuring control of the display format of the video stream (fv) by the client (CL), the modified setting format of the modified video element being dependent on the supplied resolution (S) of the equipment (EQT) supplying the video stream (fv), on a size (T) of the display window of the client (CL) in which the video stream (fv) is displayed, the display window of the client being monitored (1312d),

and on a display accuracy parameter, the modified setting format of the modified video element, written to a display database for consultation, having the same relationship as the supply resolution to the size (T) of the display window in which the video stream (fv) is displayed by the client (CL), where adapting display of the video stream is also triggered when a modification of the display window is detected by the monitoring action.

14. Device for displaying a video stream (fv) in a window of a client (13),

the display device (131) comprising an adapter (1312) for adapting display of the video stream (fv), the adapter (1312) modifying, during display by the client (13) of a video stream (fv) received from an equipment (2) supplying the video stream *(fv)* with a supplied resolution (S), a setting format in a video element (bv) of the client (13), the setting format of the video element (*bv*) being capable of configuring control of the display format of the video stream (fv) by the client (13), the modified setting format of the modified video element (bv') being dependent on the supplied resolution (S) of the equipment (2) supplying the video stream (fv), on a size of the display window of the video stream *(fv)*, the display window of the client being configured for monitoring (1312d), and on a display accuracy parameter, the modified setting format of the modified video element (bv'), written to a display database for consultation, having the same relationship as the supplied resolution (S) to the size of the display window in which the video stream *(fv)* is displayed by the client (13), where adapting display of the video stream is also triggered when a modification of the display window is detected by the monitoring action.

15. Client (13) capable of displaying video streams (fv) comprising:

- a device (131) for displaying a video stream *(fv)* in a window of the client (13), the video stream *(fv)* having been received from an equipment (2) supplying the video stream (fv) with a supplied resolution (S), and **characterized in that** the client (13) comprises:

- an adapter (1312) for adapting display of the video stream (*fv*), the adapter (1312) modifying, during display, a setting format in a video element (bv) of the client (13), the setting format of the video element (bv) being capable of configuring control of the display format of the video stream (fv) by the client (13), the modified setting format of the modified video element (*bv'*) being dependent on the supplied resolution (S) of an equipment (2) supplying the video stream (fv), on a size of the display window of the video stream (*fv*), the display window of the client being configured for monitoring (1312d), and on a display accuracy parameter, the modified setting format of the modified video element (*bv'*), written to a display database for consultation, having the same relationship as the supplied resolution (S) to the size of the display window in which the video stream (fv) is displayed by the client (13), where adapting display of the video stream is also triggered when a modification of the display window is detected by the monitoring action.

Fig. 1

Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 20120066289 A

**Littérature non-brevet citée dans la description**

• A seamless Web intégration of Adaptive HTTP Streaming. *EUSIPCO,* 27 Août 2012, 15919-1523